# EUROPÄISCHE PATENTANMELDUNG

(11) **EP 0 715 806 A1**
(43) Veröffentlichungstag der Anmeldung: **12.06.1996**
(21) Anmeldenummer: 95118650.1
(22) Anmeldetag: 27.11.1995
(51) Int. Cl.: A01K 5/02

(54) **Verfahren zum Füttern von Tieren, insbesondere Masttieren**

(30) Priorität: 25.11.1994 DE 4441992
(71) Anmelder: Maschinenfabrik Meyer-Lohne GmbH, D-49393 Lohne (DE)
(72) Erfinder:
(74) Vertreter: Möller, Friedrich, Dipl.-Ing.

(57) **Zusammenfassung**

Bei der Mast von Tieren, insbesondere Schweinen, kommt der wirtschaftlichen Fütterung eine große Bedeutung zu. Es wird angestrebt, mit möglichst gringem Aufwand die Schweine bedarfsgerecht zu Füttern, um mit einem minimalen Futter- bzw. Nährstoffeinsatz auskommen zu können.

Erfindungsgemäß erfolgt die Futterabgabe an den jeweiligen Futterabgabestellen (11) in Abhängigkeit von dem Gewicht des an der jeweiligen Futterabgabestelle (11) entnommenen Futters, indem dieses bei der Ermittlung der bedarfsgerechten Futterabgabe berücksichtigt wird. Das Gewicht des jeweils abgegebenen Futters läßt Rückschlüsse auf das erreichte Gewicht der Schweine zu. Anhand eines gewichtsabhängigen Futterbedarfprofils ist so eine den Bedürfnissen gerecht werdende Fütterung gewährleistet. Ein kostenträchtiges Überfüttern wird so vermieden. Die Schweine erhalten nur die für Ihr jeweils erreichtes Gewicht erforderliche Nährstoffmenge.

## Beschreibung

Die Erfindung betrifft ein Verfahren zur Fütterung von Tieren, insbesondere Masttieren, nach dem Oberbegriff des Anspruchs 1.

Durch zunehmenden Konkurrenzdruck stagnieren bzw. sinken die am Markt erzielbaren Fleischpreise, und zwar insbesondere für Schweinefleisch. Das führt dazu, daß die Kosten der Fleischproduktion, nämlich die Mastkosten, minimiert werden müssen.

Einen wesentlichen Anteil an den Mastkosten stellen die Futter- und Fütterungskosten dar. Diesen Kosten gilt deshalb eine besondere Aufmerksamkeit. Demzufolge ist man bestrebt, die Tiere mit Futter zu versorgen, das vor allem hinsichtlich des Nährstoffgehalts an die Tierart, das Tieralter bzw. die Entwicklungsphase der Tiere angepaßt ist. Die Tiere sollen gezielt mit einem solchen Futter versorgt werden, das die jeweils erforderlichen Nährstoffe enthält. Die Tiere sollen mit dem Futter nur so viele Nährstoffe erhalten, wie sie im jeweiligen Maststadium verwerten können. Schließlich wird angestrebt, die Fütterungskosten durch eine weitestgehende Automatisierung zu verringern, indem der manuelle Fütterungsaufwand größtenteils reduziert wird.

Bekannte Fütterungen, bei denen es sich um sowohl Naß- als auch Trockenfütterungen handeln kann, transportieren das Futter durch Leitungen zu den Tieren. Um mit diesen Fütterungsanlagen die Tiere mit der erforderlichen Menge und Zusammensetzung des Futters versorgen zu können, ist ein relativ großer, apparativer Aufwand erforderlich. Solche Fütterungsanlagen sind insbesondere im rauhen Stallbetrieb störanfällig. Darüber hinaus erlauben die bekannten Fütterungsanlagen keine Rückschlüsse auf die Freßgewohnheiten und den Wachstumsstand der Tiere.

Hiervon ausgehend liegt der Erfindung die Aufgabe zugrunde, ein Verfahren zum Füttern von Tieren, insbesondere Masttieren, zu schaffen, womit in einfacher Weise eine bedarfsgerechte Fütterung erfolgen kann.

Ein Verfahren zur Lösung dieser Aufgabe weist die Maßnahmen des Anspruchs 1 auf. Demnach erfolgt die Fütterung in Abhängigkeit vom Futterbedarf und/oder die Futteraufnahme der Tiere. Das erfindungsgemäße Verfahren erfolgt demnach nicht nur nach theoretischen Vorgaben; vielmehr werden die Vorgaben anhand der Futteraufnahme der Tiere auch überwacht, und zwar vorzugsweise fortlaufend oder in regelmäßigen Abständen, z. B. täglich. Dadurch ist es möglich, auftretende Abweichungen von theoretischen Vorgaben unter Heranziehung der tatsächlich vorhandenen Gegebenheiten festzustellen und diese Abweichungen bei der nachfolgenden Fütterung zu berücksichtigen. Durch die Einbeziehung dieser Abweichungen in die Fütterung kann Futter eingespart werden. Die Tiere erhalten nämlich kein Futter, insbesondere keine Nährstoffe, die von den Tieren aufgrund Ihres vorliegenden Entwicklungsstandes nicht gebraucht und demzufolge nicht in eine entsprechende Gewichtszunahme umgesetzt werden.

Vorzugsweise erlaubt das erfindungsgemäße Verfahren eine bedarftsgerechte Steuerung bzw. Regelung der Fütterung, indem vorgegebene Solidaten, insbesondere in Form mindestens einer Futterkurve, mit von mindestens einer Futterabgabestelle stammenden Istdaten ständig oder in regelmäßigen Abständen verglichen werden. Die Istdaten werden zurückgeführt zur Steuerung der Fütterungsanlage, beispielsweise einem Fütterungscomputer. Aufgrund der Kenntnis, daß die Genetik der Tiere durch entsprechende Zucht nahezu homogen ist, woraus sich der Nährstoffbedarf der Tiere in Abhängigkeit von ihren Gewicht vorherbestimmen läßt und eine nahezu lineare Korealanz zwischen der Futteraufnahme und der Gewichtszunahme der Tiere besteht, läßt sich aufgrund der an mindestens einer Futterabgabestelle gewonnenen Daten, insbesondere bezüglich der Menge bzw. des Gewichts des aufgenommenen Futters, der Fütterungsprozeß so regeln, daß die Tiere das für ihr jeweiliges Wachstumsstadium benötigte Futter erhalten. Der Begriff "Futter" bezieht sich im Zusammenhang mit der Erfindung auf die Menge und/oder Zusammensetzung desselben.

Erfindungsgemäß wird ermittelt, ob Abweichungen des an mindestens einer Futterabgabestelle entnommenen Futters (hinsichtlich der Menge oder des Gewichts) zum theoretischen Futterbedarf vorhanden sind. Sofern solche Abweichungen festgestellt werden, werden diese bei der zukünftigen Fütterung, insbesondere bei der Zusammensetzung bzw. Zusammenstellung des zukünftigen Futters berücksichtigt. Dazu wird erfindungsgemäß eine rechnerische Verschiebung in der Futterkurve oder eine Veränderung bzw. Neuauswahl der Futterkurve vorgenommen. Auf diese Weise ist es möglich, theoretische Vorgaben mit in der Praxis gewonnenen Werten zu vergleichen und festgestellte Abweichungen in nachfolgende Fütterungen einfließen zu lassen (teach-in). so wird insbesondere vermieden, daß die Tiere mit Futter versorgt werden, dessen Nährstoffgehalt nicht den wachstumsbedingten Anforderungen der Tiere entspricht oder gar überflüssige Nährstoffe verfüttert werden.

Erfindungsgemäß wird des weiteren vorgeschlagen, zur Ermittlung des theoretischen Futterbedarfs mindestens eine Futterkurve heranzuziehen, die auf das Gewicht oder gegebenenfalls Alter der Tiere (Mastdauer) bezogene Futtervorgaben enthält. Bei diesen Futtervorgaben handelt es sich insbesondere um die Futterzusammensetzung, und zwar vorzugsweise hinsichtlich des Nährstoffgehalts im Futter.

Ein wesentlicher Aspekt der Erfindung bezieht sich darauf, daß festgestellte Abweichungen zwischen der ermittelten Futteraufnahme an mindestens einer Futterabgabestelle und der vorgegebenen Futterkurve bei nachfolgenden Fütterungen berücksichtigt werden. Dazu wird das Futter, insbesondere die Futterzusammensetzung, entsprechend verändert. Vorzugsweise wird zu diesem Zweck eine solche Stelle der Futterkurve ermittelt, die dem errechneten oder in einer sonstigen Weise festgestellten Gewicht der Tiere entspricht oder am nächsten kommt. Anhand der dieser Stelle zugeordneten Werte, insbesondere Nährstoffwerte, wird das für die nächste Fütterung (oder die nächsten Fütterungen) zu verwendende Futter zusammengestellt. Auf diese Weise werden Abweichungen von den theoretischen Vorgaben der Futterkurve quasi nach dem "teach in"-Prinzip kompensiert. Wenn sich zum Beispiel ergibt, daß aufgrund der tatsächlich aufgenommenen Futtermenge das daraus errechnete Gewicht der Tiere sich rascher vergrößert als durch die Futterkurve (theoretisch) vorgegeben, wird für die oder jede zukünftige Fütterung eine entsprechende Korrektur vorgenommen. Dadurch wird erreicht, daß die Tiere Futter erhalten, das hinsichtlich seiner Zusammensetzung, insbesondere der Nährstoffe, dem tatsächlichen Gewicht der Tiere entspricht. Analog wird verfahren, wenn festgestellt wird, daß die Tiere weniger an Gewicht zunehmen als durch die Futterkurve (theoretisch) vorgegeben wird. Dieses Vorgehen wird ständig wiederholt während der gesamten Mastperiode.

Alternativ ist es denkbar, Abweichungen des tatsächlichen Gewichts der Tiere von den (theoretischen) Vorgaben der Futterkurve durch eine Anpassung oder Veränderung der Futterkurve auszugleichen. Beispielsweise kann hierbei umgestellt werden auf eine den tatsächlichen Gegebenheiten weitestgehend entsprechende andere Futterkurve. In diesem Falle sind im Rechner der Fütterungsanlage verschiedene Futterkurven abgespeichert, von denen in Abhängigkeit von den tatsächlich festgestellten Gewichtszunahmen der Tiere die jeweils passende Futterkurve ausgesucht wird, also ein Wechsel auf eine zutreffendere Futterkurve stattfindet.

Die Erfindung ermöglicht es auch, Freßgewohnheiten der Tiere, ihren Gesundheitszustand und das Stallklima bei der Futterzuteilung zu berücksichtigen. Es ist auch denkbar, zur Erreichung der theoretischen Futteraufnahme und Futterverwertung von der Fütterungsanlage das Stallklima beeinflussen zu lassen bzw. zu verändern.

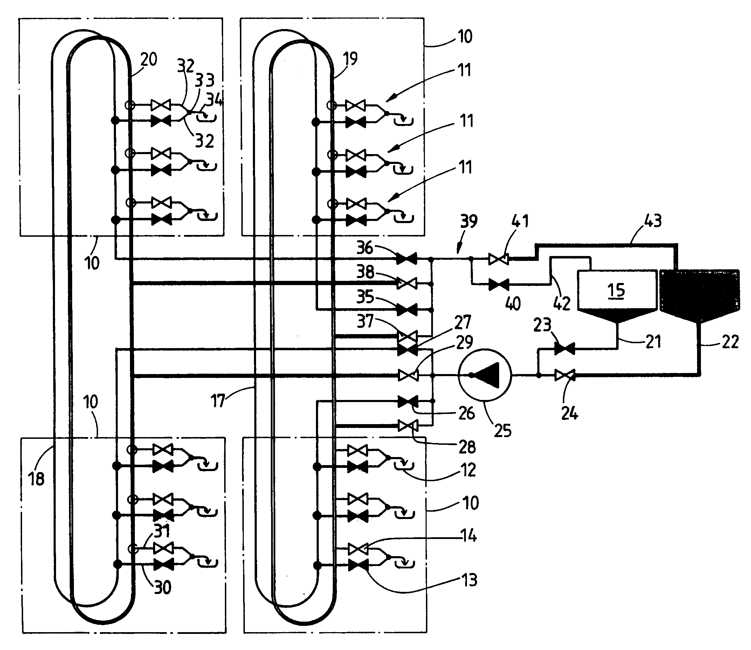

Bevorzugte Beispiele der der Erfindung zugrundeliegenden Verfahren werden nachfolgend unter Bezugnahme auf die Zeichnung näher erläutert.

Die Zeichnung zeigt schematisch, nämlich in Form eines Schaltplans, eine Fütterungsvorrichtung. Sie hält den Tieren ständig Futter bereit und dient somit vorzugsweise zur sogenannten ad libitum-Fütterung.

Bei der gezeigten Fütterungsvorrichtung handelt es sich um eine solche zur Flüssigfütterung von Mastschweinen. Es wird im folgenden (als Beispiel) angenommen, daß die Fütterungsvorrichtung zur Fütterung von vier (strichpunktiert angedeuteten) Ställen 10 dient. In jedem Stall 10 befinden sich drei nicht näher dargestellte Buchten für jeweils eine Gruppe aus mehreren Schweinen. In der Zeichnung sind nur aus Vereinfachungsgründen lediglich drei Buchten pro Stall 10 dargestellt. Tatsächlich sind in der Regel mehr als nur drei Buchten in einem Stall 10 untergebracht.

Jede Bucht verfügt über eine Futterabgabestelle 11. Die Futterabgabestelle 11 weist ein Futteraufnahmemittel, bei dem es sich vorzugsweise um ein Futternapf 12 mit einem Fassungsvermögen von 20 bis 30 Liter Futter handelt, und zwei Ventile 13 und 14 auf.

Die Fütterungsvorrichtung verfügt ferner über zwei Futtervorratsbehälter 15 und 16. Jeder dieser Futtervorratsbehälter 15 und 16 dient zur Aufnahme und Lagerung eines Vorrats einer bestimmten Futterkomponente oder einer Vormischung aus einigen bestimmten Futterkomponenten. Jeder Futtervorratsbehälter 15 und 16 ist über eine eigene Leitung mit einem entsprechenden Ventil 13 bzw. 14 der einzelnen Futterabgabestellen 11 verbunden. Im gezeigten Ausführungsbeispiel sind insgesamt vier Leitungen, also zwei Leitungen für jede Futterkomponente, vorhanden. Es werden jeweils zwei Ställe 10 von einer ersten Leitung für die eine Futterkomponente und einer zweiten Leitung für die zweite Futterkomponente versorgt. Die Leitungen sind hier als Ringleitungen 17, 18, 19 und 20 ausgebildet. Dem Futtervorratsbehälter 15 für die eine Futterkomponente sind die Ringleitungen 17 und 18 zugeordnet während der Futtervorratsbehälter 16 für die andere Futterkomponente mit den Ringleitungen 19 und 20 in Verbindung bringbar ist.

Am Auslauf jedes Futtervorratsbehälters 15 und 16 ist ein Auslaufleitungsabschnitt 21 bzw. 22 angeordnet. Jeder Auslaufleitungsabschnitt 21, 22 weist an seinem Ende ein Ventil 23, 24 auf. Beide Ventile 23, 24 führen gemeinsam zur Saugseite einer (einzigen) Futterförderpumpe 25. Auf der Druckseite steht die Futterförderpumpe 25 mit vier Ventilen 26, 27, 28 bzw. 29 am Eingang der Ringleitungen 17, 18,19 und. 20 in Verbindung. Durch eine entsprechende Betätigung der Ventile 23, 24 und 26 bis 29 kann mit der (einzigen) Futterförderpumpe 25 jede der Ringleitungen 17 bis 20 mit der entsprechenden Futterkomponente aus dem Futtervorratsbehälter 15 oder 16 versorgt werden. Alternativ ist es denkbar, zwei Futterförderpumpen vorzusehen, indem jedem Futtervorratsbehälter 15, 16 und damit jeder Futterkomponente eine eigene Futterförderpumpe zugeordnet ist. Es können dann beide Futterkomponenten gleichzeitig gefördert werden. Die Ventile 23 und 24 können dann entfallen. Es dienen lediglich die Ventile 26 bis 29 noch dazu, den Förderfluß der einzelnen Futterkomponenten so zu steuern, daß die Futterkomponenten durch diejenigen Ringleitungen 17, 19 bzw. 18, 20 fließen, die zur jeweils mit den Futterkomponenten zu versorgenden Futterabgabestelle 11 führen.

Die beiden Ventile 13 und 14 jeder Futterabgabestelle 11 sind über Verbindungsleitungsabschnitte 30 und 31 mit der entsprechenden Ringleitung 17, 18, 19 oder 20 verbunden. Durch ein Öffnen des entsprechenden Ventils 13 oder 14 kann die jeweilige Futterkomponente an die entsprechende Futterabgabestelle 11 abgegeben werden, wobei die Ventile 13 und 14 der übrigen Futterabgabestellen 11 geschlossen sind.

Im gezeigten Ausführungsbeispiel sind die dem Futternapf 12 zugewandten Abgabeseiten der Ventile 13 und 14 mit schematisch dargestellten Auslaufleitungen 32 versehen, die an einer Sammelstelle 33 zusammengeführt sind. Von der Sammelstelle 33 verläuft eine gemeinsame Auslaufleitung 34 zum Futternapf 12. Wird die Fütterungsvorrichtung mit zwei Futtervorratspumpen betrieben und dadurch beide Futterkomponenten gleichzeitig der jeweiligen Futterabgabestelle 11 zugeführt, findet an der Sammelstelle 33 eine Vermischung der beiden Futterkomponenten statt, so daß beide miteinander vermischten Futterkomponenten gemeinsam über die Auslaufleitung 34 in den Futternapf 12 gelangen können.

Die Enden der Ringleitungen 17, 18, 19 und 20 sind ebenfalls verschlossen durch Ventile 35, 36, 37 und 38. Durch ein entsprechendes Verteilerleitungsnetz 39 ist eine Leistungsverbind zwischen den Ventilen 35, 36, 37 und 38 und den Ventilen 40 und 41 am Eingang zweier Rücklaufleitungsabschnitte 42 und 43 herstellbar. Jeder Rücklaufleitungsabschnitt 42 bzw. 43 mündet in einen entsprechenden Futtervorratsbehälter 15 und 16, wodurch der Kreislauf der Ringleitungen 17, 18, 19 und 20 vom entsprechenden Futtervorratsbehälter 15 bzw. 16 zurück zum gleichen Futtervorratsbehälter 15 oder 16 geschlossen werden kann. Im gezeigten Ausführungsbeispiel passieren alle zurückfließenden Futterkomponenten im Verteilerleitungsnetz 39 einen einzigen, gemeinsamen Leitungsabschnitt. Vor allem beim Vorhandensein zweier Futterförderpumpen kann das Verteilerleitungsnetz gegenüber der Darstellung in der Zeichnung so abgewandelt sein, daß die Futterkomponenten durch getrennte Leitungen zurückfließen, wodurch die Ventile 40 und 41 entfallen können. Der Rücklaufleitungsabschnitt 42 ist dann direkt mit dem Ventil 35 der Ringleitung 17 und dem Ventil 36 der Ringleitung 18 verbunden. Dementsprechend ist der Rücklaufleitungsabschnitt 43 mit dem Ventil 37 der Rücklaufleitung 19 und dem Ventil 38 der Rücklaufleitung 20 verbunden.

Alle Ventile sind zentral betätigbar durch eine entsprechende Steuerung. Sie lassen sich also bedarfsweise öffnen und schließen zur Fütterung an der entsprechenden Futterabgabestelle 11 und zum Transport der jeweiligen Futterkomponente durch die entsprechende Ringleitung 17, 18, 19 oder 20. Des weiteren sind die Futtervorratsbehälter 15, 16 als Wiegebehälter ausgebildet, wodurch das Gewicht der jeweils aus dem Futtervorratsbehälter 15 und 16 entnommenen Futterkomponente feststellbar ist. Auf diese Weise ist eine exakt dosierte Abgabe bestimmter Portionen der jeweiligen Futterkomponente an der entsprechenden Futterabgabestelle 11 möglich. Durch die gemeinsame Steuerung werden in Abhängigkeit von der momentan mit den Futterkomponenten zu versorgenden Futterabgabestelle 11 die Ventile 26, 27, 28 und 29 am Eingang der Ringleitungen 17, 18, 19 und 20 so gesteuert, daß automatisch die entsprechende Ringleitung (oder zwei entsprechende Ringleitungen gleichzeitig) mit der oder den Futterkomponenten versorgt werden.

Die Ventile 35, 36, 37, 38 und 40 bzw. 41 am Ende der Ringleitungen 17, 18, 19 und 20 werden nur betätigt, wenn die Ringleitungen 17, 18, 19, 20 geleert werden sollen. Dazu sind die Futterkomponenten getrennt voneinander wieder genau in den Futtervorratsbehälter 15 bzw. 16 zurücktransportierbar, aus dem sie entnommen worden sind. Vermischungen der einzelnen Futterkomponenten sind dadurch nicht möglich. Futterabfälle aus bereits miteinander vermischten Futterkomponenten können auf diese Weise nicht entstehen.

Alternativ ist es auch denkbar, die Portionierung der Futterkomponenten volumenabhängig durchzuführen. Dazu ist vorzugsweise der Förderpumpe 25 oder den Förderpumpen ein Mengendurchflußmesser zugeordnet.

Die Futternäpfe 12 sind mit Meßeinrichtungen versehen, die den momentanen Futterinhalt im jeweiligen Futternapf 12 volumen- oder gewichtsmäßig erfassen. Hierbei kann es sich beispielsweise um eine Füllstandshöhenanzeige oder eine Gewichtsanzeige handeln. Entsprechende Meßwertaufnehmer, die vorzugsweise elektronisch arbeiten, sind verbunden mit der Zentrale der Fütterungsvorrichtung, beispielsweise einem Fütterungscomputer. Diesem wird ständig angezeigt, wieviel Futter im jeweiligen Futternapf 12 vorhanden ist. Vorzugsweise wird der Futterinhalt jedes Futternapfes 12 erfaßt und ggf. protokolliert. Bei Ställen mit Tieren homogener Genetik kann es ausreichen, wenn in jedem Stall nur ein Futternapf 12 hinsichtlich seines Futterinhalts überprüft wird. Des weiteren wird in Abhängigkeit von Füllstand der Futternäpfe 12 eine Nachfüllung derselben vorgenommen, so daß eine nahezu kontinuierliche Futterabgabe und eine ständige Futtervorlage gewährleistet sind.

Der Fütterungscomputer der Fütterungsvorrichtung ist versehen mit einem sich über die gesamte Mastperiode erstreckendes Futterbedarfsprofil, insbesondere eine Futterkurve, das auf die jeweils zu mästende Tierart bezogen ist, nämlich die züchtungs- und herkunftsabhängige Genetik der Tiere berücksichtigt. Daraus wird ein alters- und/oder gewichtsbezogener Nährstoffbedarf errechnet, woraus der Fütterungscomputer Angaben erhält, welches Futter, welche Futtermenge bzw. welche Futtermischung bezogen auf das jeweilige Gewicht und/oder Alter der Tiere erforderlich ist. Insbesondere ergibt sich so der aktuelle Nährstoffbedarf der Tiere. Dementsprechend wird das benötigte Futter zusammengestellt aus entsprechenden Portionen der beiden Futterkomponenten. Das geschieht dadurch, daß von jeder Futterkomponente eine Portion entsprechend der errechneten Menge oder des errechneten Gewichts zur jeweiligen Futterabgabestelle transportiert wird. Die einzelnen Futterkomponenten bestehen zu diesem Zweck wiederum aus einem Gemisch aus Grundfutter, Nährstoffen, gegebenenfalls Wasser und eventuell Arzneimittel. Die einzelnen Anteile dieser Mischung sind so aufeinander abgestimmt, daß sich darauf mit relativ großer Genauigkeit alle erforderlichen Futterzusammensetzungen durch Zusammenführen entsprechender Portionen der beiden Futterkomponenten bilden lassen.

Durch die Messung vorzugsweise des Gewichts der abgegebenen Futtermenge am jeweiligen Futternapf 12 der entsprechenden Futterabgabestelle 11 erhält man Rückschlüsse auf die von jedem Schwein verzehrte Futtermenge. Bei Tieren homogener Genetik kann man davon ausgehen, daß jedes Tier die gleiche Futtermenge verzehrt. Das gilt insbesondere für eine ad lib-Fütterung, bei der durch ständiges Nachfüllen im Futternapf 12 stets Futter vorhanden ist und die Tiere nach Belieben sich versorgen können, also nahezu alle Tiere eine gleiche Menge an Futter aufnehmen. Durch das ständige Nachfüllen des Futternapfs 12 kann dieser relativ klein gehalten werden (20 bis 30 Liter), so daß Futterverluste in die Futterabgabestellen 11 (beispielsweise durch Verderben überschüssigen Futters) ausgeschlossen werden. Aufgrund dessen kann davon angenommen werden, daß das an den Futternäpfen 12 ermittelte Futtergewicht dividiert durch die Anzahl der Tiere in der jeweiligen Bucht dem Gewicht des tatsächlich von jedem Tier aufgenommenen Futters entspricht. Aufgrund der weiterhin gegebenen Korrelation zwischen der Futteraufnahme und der Gewichtszunahme der Tiere läßt sich das jeweilige Gewicht der Tiere bestimmen aus dem Anfangsgewicht zuzüglich des mit einem Korrelationsfaktor multiplizierten Gewichts des gefressenen Futters. Aufgrund dieses rechnerisch dem tatsächlichen Gewicht nachvollzogenen Gewichts der Tiere kann anhand des im Fütterungscomputer vorhandenen gewichtsbezogenen Nährstoffprofils bzw. der Fütterungskurve für die zu mästenden Tiere das Futter so aus den Futterkomponenten zusammengestellt werden, daß es den tatsächlichen Nährstoffgehalt der Tiere (bezogen auf das tatsächliche und in vorstehend beschriebener Weise errechneten Gewicht) entspricht.

Erfindungsgemäß erfolgt eine ständige oder periodische, beispielsweise tägliche, Anpassung der Fütterung an die tatsächlichen Gegebenheiten wie folgt: Aus der Futteraufnahme der Tiere wird das Gewicht derselben unter Berücksichtigung des zutreffenden Korrelationsfaktors ermittelt. Unter Berücksichtigung der züchtungs- bzw. herkunftsabhängigen Genetik der Tiere ergibt sich die jeweils erforderliche Nährstoffversorgung.

Die Fütterungskurve enthält das theoretische Gewicht der Tiere in Abhängigkeit von der Dauer der Mast, insbesondere dem jeweiligen Masttag. Aus dem Gewicht der Tiere kann wiederum unter Zuhilfenahme entsprechender Vorgaben der Nährstoffbedarf ermittelt werden. Wird nun festgestellt, daß an einem bestimmten Masttag das errechnete Gewicht der Tiere über dem sich theoretisch aus der Futterkurve ergebenden Gewicht der Tiere liegt, ist das ein Indiz für eine schnellere Gewichtszunahme. Entsprechend muß das Futter zusammengestellt sein, d. h. die Nährstoffe des Futters müssen an das jeweilige Gewicht der Tiere angepaßt sein. Es wird dazu eine Verschiebung auf der Futterkurve gegenüber dem tatsächlich errechneten Gewicht der Tiere bzw. dem dazugehörigen Masttag vorgenommen, und zwar vorzugsweise rechnerisch. Dabei ergibt sich aus der Fütterungskurve ein veränderter Masttag, und zwar ein solcher, der nicht dem tatsächlichen Masttag entspricht; vielmehr einem späteren Masttag. Dieser wird für die nachfolgende Fütterung oder Fütterungen bei der Zusammenstellung des Futters, insbesondere hinsichtlich des Nährstoffgehalts, herangezogen. Wenn also zum Beispiel am zehnten Masttag die Tiere ein höheres Gewicht erreicht haben als für diesen Masttag theoretisch vorgesehen, wird für die nachfolgende Fütterung derjenige Masttag herangezogen, der dem tatsächlichen Gewicht der Tiere entspricht, beispielsweise der vierzehnte Masttag. Es würde dann am nächsten elften Masttag mit einem Futter gefüttert, das an sich erst am fünfzehnten Masttag verwendet worden wäre. Es wird mithin der tatsächlichen Gewichtszunahme der Tiere Rechnung getragen, indem bei schnellerer Gewichtszunahme der Tiere einige Masttage übersprungen und dadurch vermieden wird, daß die Tiere Nährstoffe erhalten, die sie theoretisch nach der Futterkurve erhalten würden; aufgrund der tatsächlich schnellen Gewichtszunahme aber nicht mehr benötigen. Es können so wirksam Nährstoffe eingespart werden. In analoger Weise wird verfahren, wenn die Tiere langsamer als vorgesehen an Gewicht zunehmen. In diesem Falle wäre zusätzlich zu überprüfen, welche Gründe zur langsameren Gewichtszunahme geführt haben, indem beispielsweise ein falsches Stallklima korrigiert wird.

Es sind verschiedene Abwandlungen der Erfindung denkbar. So kann zum Beispiel durch ständiges Wiegen oder Abscannen der Tiere einer Gruppe überprüft werden, ob das errechnete Gewicht der Tiere mit dem tatsächlichen Gewicht übereinstimmt. Wenn Abweichungen vorhanden sind, kann daraus geschlossen werden, daß die Tiere krank sind oder das Stallklima nicht stimmt. Zumindest im letztgenannten Falle kann aufgrund der so gewonnenen Informationen auf eine Veränderung des Stallklimas eingewirkt werden. Des weiteren kann in die rechnerische Ermittlung des Gewichts der Tiere einfließende Fremdwasseraufnahme, also das Gewicht des von den Tieren zusätzlich aufgenommenen Leitungswassers ohne Futterbestandteile. Weiter ist es möglich, nach dem Verbrauch der vorgegebenen Menge an nährstoffhaltigem Futter einen eventuell noch vorhandenen Freßbedarf der Tiere durch ein nährstoffarmes Futter zu befriedigen.

Des weiteren kann die Erfindung auch Trockenfütterungsanlagen Verwendung finden. Schließlich sind beliebige Abwandlungen der Fütterungsvorrichtung vom vorstehend erläuterten Ausführungsbeispiel denkbar. So kann insbesondere die Anzahl der von der Fütterungsvorrichtung zu versorgenden Ställe und Anzahl der Buchten der Ställe beliebig variiert werden. Auch ist es denkbar, Futter abweichend vom vorstehend beschriebenen Ausführungsbeispiel aus drei oder noch mehreren Futterkomponenten zu mischen. Es ist dann eine entsprechend größere Anzahl von Leitungen bzw. Rohrleitungen erforderlich. Außerdem ist es denkbar, die Leitungen nicht als Rohrleitungen sondern als Förderschnecken auszubilden.

## Patentansprüche

1. Verfahren zum Füttern von Tieren, insbesondere Masttieren, wobei das Futter durch mindestens eine Leitung zu einzelnen Tieren oder einer Gruppe von Tieren zugeordneten Futterabgabestellen transportiert wird, **dadurch gekennzeichnet**, daß das an mindestens einer Futterabgabestelle (11) entnommene Futter bei der zukünftigen Fütterung berücksichtigt wird.

2. Verfahren nach Anspruch 1, dadurch gekennzeichnet, daß die Fütterung in Abhängigkeit vom (theoretischen) Futterbedarf unter Berücksichtigung des an mindestens einer Futterabgabestelle (11) (tatsächlich) entnommenen Futters vorgenommen wird.

3. Verfahren nach Anspruch 1 oder 2, dadurch gekennzeichnet, daß eventuelle Abweichungen des an mindestens einer Futterabgabestelle (11) entnommenen Futters zum (theoretischen) Futterbedarf ermittelt und bei der Zusammenstellung des Futters für eine oder mehrere zukünftige Fütterungen berücksichtigt werden.

4. Verfahren nach einem oder mehreren der Ansprüche 1 bis 3, dadurch gekennzeichnet, daß der theoretische Futterbedarf aus auf das Alter und/oder Gewicht der Tiere bezogenen Futtervorgaben (Futterkurve) entnommen wird.

5. Verfahren nach einem oder mehreren der Ansprüche 1 bis 4, dadurch gekennzeichnet, daß in Abhängigkeit von Abweichungen des an mindestens einer Futterabgabestelle (11) entnommenen Futters von der (vorgegebenen) Futterkurve die Futterkurve verändert, insbesondere an das tatsächlich entnommene Futter angepaßt wird, und vorzugsweise die veränderte bzw. angepaßte Futterkurve für zukünftige Fütterungen herangezogen wird.

6. Verfahren nach einem oder mehreren der Ansprüche 1 bis 4, dadurch gekennzeichnet, daß in Abhängigkeit von Abweichungen des an mindestens einer Futterabgabestelle (11) entnommenen Futters von der (vorgegebenen) Futterkurve ein dem tatsächlich entnommenen Futter entsprechender oder am nächsten kommender Punkt der Futterkurve aufgesucht wird und dieser als Ausgangspunkt für die nachfolgende Fütterung oder Fütterungen verwendet wird.

7. Verfahren nach einem oder mehreren der Ansprüche 1 bis 6, dadurch gekennzeichnet, daß das Gewicht bzw. die Menge der an der oder jeder Futterabgabestelle (11) abgegebenen Futters berücksichtigt wird.

8. Verfahren nach einem oder mehreren der Ansprüche 1 bis 7, dadurch gekennzeichnet, daß das Gewicht bzw. die Menge des an der jeweiligen Futterabgabestelle (11) abgegebenen Futters zur (rechnerischen) Ermittlung des Gewichts der Tiere herangezogen wird.

9. Verfahren nach einem oder mehreren der Ansprüche 1 bis 8, dadurch gekennzeichnet, daß der Futterbedarf der Tiere bezogen wird auf mindestens das Gewicht der Tiere und/oder die Genetik derselben.

10. Verfahren nach einem oder mehreren der Ansprüche 1 bis 9, dadurch gekennzeichnet, daß bis zum Erreichen des Bedarfsmenge an Futter die Futterabgabestellen (11) mit Nährstoffe enthaltenen Futter versorgt werden und der anschließend noch bestehende Futterbedarf der Tiere mit nährstoffarmen oder nährstofflosen Futter erfolgt.

11. Verfahren nach einem oder mehreren der Ansprüche 1 bis 10, dadurch gekennzeichnet, daß mindestens die Menge oder das Gewicht des an mindestens einer Futterabgabestelle (11) abgegebenen Futters aufgezeichnet und/oder gespeichert wird.

12. Verfahren nach einem oder mehreren der Ansprüche 1 bis 11, dadurch gekennzeichnet, daß unterschiedliche Futterkomponenten im Bereich der jeweiligen Futterabgabestelle (11) vermischt werden, vorzugsweise durch gleichzeitige Zufuhr mehrerer, insbesonderer aller, Futterkomponenten zu einem Futteraufnahmemittel (Futternapf 12) der entsprechenden Futterabgabestelle (11).

13. Verfahren nach einem oder mehreren der Ansprüche 1 bis 12, dadurch gekennzeichnet, daß die an die jeweilige Futterabgabestelle (11) abgegebenen Futterkomponenten derart dosiert werden, daß die einzelnen Futterkomponenten zusammen das jeweils erforderliche Futter ergeben.
